# EUROPÄISCHE PATENTSCHRIFT

(11) **EP 2 570 248 B1**
(45) Veröffentlichungstag und Bekanntmachung des Hinweises auf die Patenterteilung: **16.07.2014**
(21) Anmeldenummer: 12179460.6
(22) Anmeldetag: 07.08.2012
(51) Int. Cl.: B29C 33/10, B29D 30/06

(54) **Vulkanisierform für Fahrzeugreifen**
Vulcanisation mould for vehicle tyres
Forme vulcanisée pour pneus de véhicules

(30) Priorität: 16.09.2011 DE 102011053663
(43) Veröffentlichungstag der Anmeldung: 20.03.2013
(73) Patentinhaber: Continental Reifen Deutschland GmbH, 30165 Hannover (DE)
(72) Erfinder: Guerrero, Andres, 30165 Hannover (DE); Schlittenhard, Jan, 30900 Wedemark (DE); Brandau, Christian, 30419 Hannover (DE)
(74) Vertreter: Finger, Karsten

(56) Entgegenhaltungen:
- EP-A2- 0 396 060
- JP-A- 2005 028 590
- JP-A- 2005 324 510
- JP-A- 2009 137 090

## Beschreibung

Die Erfindung betrifft eine Vulkanisierform für Fahrzeugreifen, welche aus Formsegmenten mit innenseitigen Formflächen zur Formgebung des heizzupressenden Fahrzeugreifens besteht, wobei die Formsegmente zylindrische Entlüftungsmittel aufweisen, welche mit der Atmosphäre in Verbindung stehen und durch welche Luft aus dem Formenhohlraum der Vulkanisierform durch das Formsegment hindurch nach außen ausleitbar ist, wobei die das Laufflächenprofil des Fahrzeugreifens formenden Formflächen der Formsegmente erhabene Stege mit Stegflanken aufweisen, wobei die Stege die Nuten des Fahrzeugreifen-Laufstreifens prägen sowie die erhabenen Profilelemente des Fahrzeugreifen-Laufstreifens begrenzen und wobei zumindest ein Entlüftungsmittel derart innerhalb eines Steges angeordnet ist, dass dieses im Bereich einer Stegflanke dieses Steges in den Formenhohlraum mündet.

Es ist bekannt, zylindrische Entlüftungsmittel in Vulkanisierformen vorzusehen, um die beim Heizpressvorgang des Reifenrohlings zwischen dem Reifenrohling und den Formflächen verbleibende Luft während des Pressvorganges des Reifenrohlings an die Formflächen aus dem Formenhohlraum abführen zu können. Es sollen unerwünschte Fehlstellen in Form von Unebenheiten an der Oberfläche des Reifens vermieden werden. Während des Heizpressvorganges bekommt der Reifenrohling seine endgültige Kontur und wird durch Kautschukvernetzungsreaktionen in seinen gummielastischen Zustand überführt.

Es ist bekannt, dass beim Ausvulkanisieren des Fahrzeugluftreifens Kautschukmaterial in als Entlüftungsmittel dienende zylindrische Entlüftungskanäle gepresst bzw. gesogen werden kann. Die dadurch entstehenden unerwünschten Austriebe bleiben auf dem fertigen Fahrzeugluftreifen erhalten und müssen vor dessen Verwendung mit eigens dafür vorgesehenen Maschinen entfernt werden. Dieses sogenannte "Trimmen" führt zu einer Verlängerung und Verteuerung des Herstellungsprozesses des Fahrzeugluftreifens. Werden diese Austriebe nicht entfernt, so ist unter Umständen die Kontaktfläche des Laufstreifens verringert, was sich nachteilig auf die Fahreigenschaften des Fahrzeugreifens auswirkt.

Es ist ebenfalls bekannt, in der Formfläche der Vulkanisierform mündende zylindrische Entlüftungskanäle durch gebohrte Ausnehmungen zu bilden, in welche verschließbare Entlüftungsventile eingesetzt sind. Als verschließbare Entlüftungsventile finden beispielsweise sogenannte "Eurovents", wie in der DE 195 43 276 A1 offenbart, Verwendung. Ein Eurovent weist in einer bestimmten Ausführungsform eine aus Metall gefertigte Hülse auf, in welcher zur Abdichtung des Formenhohlraums ein entgegen der Kraft einer Feder verschließbarer Ventilteller an einem Schaft angeordnet ist, welcher das Hülsenende in der Ebene der Formfläche verschließt. Dieses Ventil vermeidet die Austriebe, da der Ventilteller das Entlüftungsmittel in etwa mit der Formfläche fluchtend verschließt und kaum Kautschukmaterial in den Entlüftungskanal eindringen kann, jedoch kann das Eurovent durch das dennoch eindringende Kautschukmaterial verkleben und nur beschränkt einsetzbar sein. Nachteilig ist jedoch, dass der Ventilteller des Eurovents einen tellerartigen Abdruck auf dem Laufstreifen hinterlässt. Zumeist ist der tellerförmige Abdruck eine in den Laufstreifen eingeprägte Struktur, seltener eine tellerförmige erhabene Struktur. Ob der Abdruck erhaben oder vertieft am Laufstreifen ausgebildet ist, hängt davon ab, wie das Eurovent in die Vulkanisierform eingebaut ist. Durch die tellerförmigen Abdrücke ist die Kontaktfläche des Laufstreifens verringert, was sich nachteilig auf die Fahreigenschaften des Fahrzeugreifens, insbesondere auf die Eisperformance bei Winterreifen, auswirkt.

Aus der JP 2005 028590 A eine Vulkanisierform mit einem Entlüftungsmittel bekannt, welches in der Kontaktzone zwischen Stegflanke und Steggrund in den Formenhohlraum mündet. Das Entlüftungsmittel endet somit teilweise im Bereich des Steggrundes in den Formenhohlraum, wodurch ein durch das Entlüftungsmittel bedingter Abdruck auf der Kontaktfläche des Laufstreifens des heizzupressenden Fahrzeugreifens verbleibt.

Da zur Gewährung einer ausreichenden Entlüftung einer Vulkanisierform, insbesondere auch in Nischen des Reifenprofils, eine Vielzahl solcher Entlüftungskanäle, üblicherweise 500 bis 6000, pro Vulkanisierform vorgesehen werden müssen, sind eine Vielzahl an Abdrücken auf der Laufstreifenoberfläche erhalten und die Kontaktfläche des Reifens zur Fahrbahn ist dadurch nachteilig verkleinert.

Es ist bekannt, eine alternative Vulkanisierform für Fahrzeugreifen mit Entlüftungsmitteln bereitzustellen, mit der der Laufstreifen eines Fahrzeugreifens mit nur wenigen oder keinen durch Entlüftungsmittel bedingte Abdrücke vulkanisierbar ist. Zudem soll der mit dieser Vulkanisierform vulkanisierte Fahrzeugreifen nur wenige oder keine durch die Entlüftungsmittel bedingte Abdrücke auf seinem Laufstreifen aufweisen.

So offenbart die JP 2005 324510 A als nächstliegender Stand der Technik eine Vulkanisierform mit Stegen und darin angeordneten Entlüftungsmitteln. Ein erstes Entlüftungsmittel verläuft dabei parallel zum Steggrund, wobei jedes Ende des Entlüftungsmittels innerhalb einer der zwei gegenüberliegenden Stegflanken des Steges in den an die jeweilige Stegflanke angrenzenden Formenhohlraum mündet. Der zentrale Bereich dieses ersten Entlüftungsmittels ist mit einem zweiten Entlüftungsmittel verbunden, welches durch den Steg in den Körper des Formsegments mündet und mit der Atmosphäre in Verbindung steht. Durch die zwei Entlüftungsmittel steht der Formenhohlraum mit der Atmosphäre in Verbindung.

Es ist die Aufgabe der vorliegenden Erfindung, auf einfachere Art und Weise eine Vulkanisierform für Fahrzeugreifen mit Entlüftungsmitteln bereitzustellen, die die Ausleitung von Luft aus dem Formenhohlraum der Vulkanisierform gewährleistet.

Diese Aufgabe wird gelöst, indem das Entlüftungsmittel derart in den Steg mündet, dass dessen Längsachse einen Winkel zwischen 40° und 70°, vorzugsweise zwischen 45° und 60° mit der radialen Richtung der Vulkanisierform einschließt.

Somit ist beispielsweise bei einer Winterreifenform gewährleistet, dass das Entlüftungsmittel nicht mit den in die Formfläche eingelassenen Lamellenblechen kollidiert, welche die Feineinschnitte des Reifens formen.

Erfindungsgemäß weist die Vulkanisierform zumindest ein Entlüftungsmittel auf, welches an einer Stegflanke in den Formenhohlraum mündet und welches nicht im Bereich der mantelförmigen und die Kontaktfläche bildenden Oberfläche des Laufstreifens in den Formenhohlraum mündet. Somit ist ein durch das Entlüftungsmittel bedingter Abdruck wie ein Austrieb oder eine tellerförmiger Abdruck auf der Kontaktfläche des Laufstreifens des heizzupressenden Fahrzeugreifens vermieden. Der mit dieser Vulkanisierform heizzupressende Fahrzeugreifen weist eine größere Laufstreifenkontaktfläche auf. Vorteilhaft ist es, wenn das Entlüftungsmittel im unteren Drittel der Stegflanke in den Formenhohlraum mündet. Es hat sich gezeigt, dass sich in diesem Bereich beim Einformen des Reifen eine Luftansammlung bildet, so dass diese angesammelte Luft besonders effektiv abgeführt werden kann.

"Unteres Drittel der Stegflanke" meint den Abschnitt der Stegflanke, welcher dem Steggrund der Formfläche zugewandt ist und der ein Drittel der Länge der Stegflanke einnimmt.

Vorteilhaft ist es, wenn zwei Entlüftungsmittel, welche innerhalb desselben Steges angeordnet sind und an gegenüberliegenden Flanken dieses Steges in den Formenhohlraum münden, einander kreuzen. Hierdurch ist die Abführbarkeit der Luft durch das Formsegment weiter verbessert.

Weitere Merkmale, Vorteile und Einzelheiten der Erfindung werden anhand der Zeichnungen, die schematische Ausführungsbeispiele darstellen, näher erläutert. Es zeigen die:
- Fig. 1: eine segmentierte Vulkanisierform mit Formsegmenten für Fahrzeugreifen;
- Fig. 2: eine dreidimensionale Ansicht eines Profilelementes eines Fahrzeugreifens gemäß dem Stand der Technik;
- Fig. 3: eine dreidimensionale Ansicht eines Profilelementes eines Fahrzeugreifens, welcher mit einer erfindungsgemäßen Vulkanisierform heizgepresst ist;
- Fig. 4: einen Ausschnitt eines Radialschnittes durch ein Formsegment einer erfindungsgemäßen Vulkanisierform.

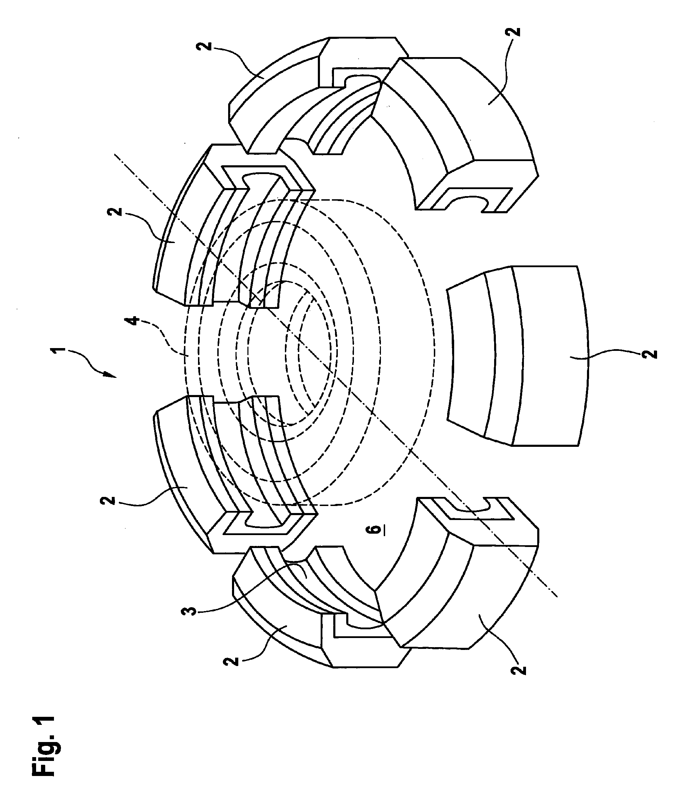

In der **Fig.1** ist eine vereinfachte schematische Darstellung einer segmentierten Vulkanisierform 1 für Fahrzeugreifen mit mehreren, zu einer umfangsmäßig geschlossenen Form zusammenfügbaren Formsegmenten 2 dargestellt. Die Formsegmente 2 sind radial verfahrbar und bilden radial innen einen Formenhohlraum 6. Eins radiale Richtung ist durch die strichpunktierte Linie dargestellt. Die Formsegmente 2 weisen innenseitig Formflächen 3 auf. Die Formflächen 3 formen das Laufflächenprofil des Fahrzeugreifens und weisen erhabene Stege mit Stegflanken (nicht dargestellt) auf, wobei die Stege die Nuten des Fahrzeugreifen-Laufstreifens prägen sowie die erhabenen Profilelemente des Fahrzeugreifen-Laufstreifens begrenzen. Die Formsegmente 2 weisen weiterhin zylindrische Entlüftungsmittel 5 (nicht dargestellt) auf, welche mit der Atmosphäre in Verbindung stehen und durch welche Gas aus dem Formenhohlraum 6 der Vulkanisierform 1 durch das Formsegment 2 hindurch nach außen ausleitbar ist.

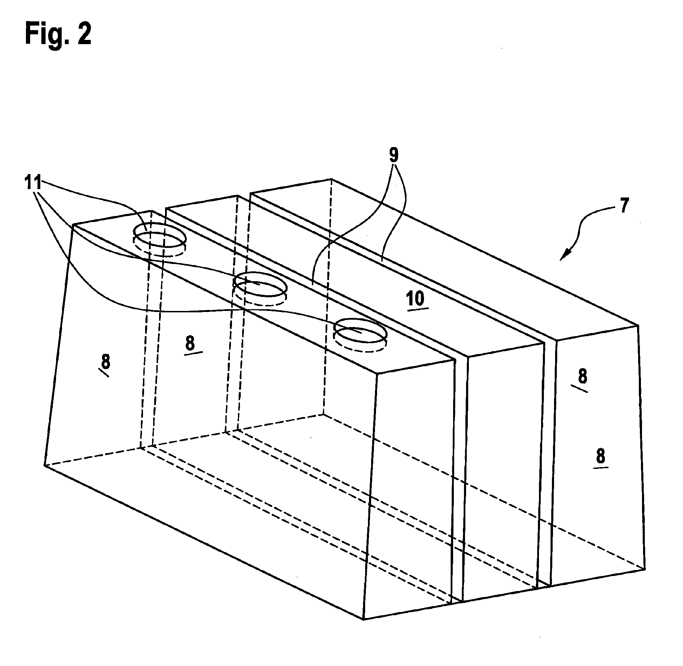

Die **Fig. 2** zeigt eine dreidimensionale Ansicht eines Profilelementes 7 eines Fahrzeugreifens gemäß dem Stand der Technik. Das Profilelement 7 ist ein Profilblock, welcher durch vier Profilblockflanken 8 begrenzt ist. Das Profilelement 7 weist weiterhin Feineinschnitte 9 auf, die typischerweise das Laufstreifenprofil eines Winterreifens charakterisieren. Auf der Laufstreifenkontaktfläche 10 sind Abdrücke 11 von Entlüftungsmitteln 5, hier die tellerförmigen Ventilabdrücke von Eurovents, angeordnet. Diese Abdrücke 11, welche je nach Einbau des Entlüftungsmittels in die Vulkanisierform erhaben oder erniedrigt in Bezug auf die Laufstreifenkontaktfläche, selten mit dieser fluchtend, angeordnet sind, verkleinern nachteilig die Laufstreifenkontaktfläche des Fahrzeugreifens.

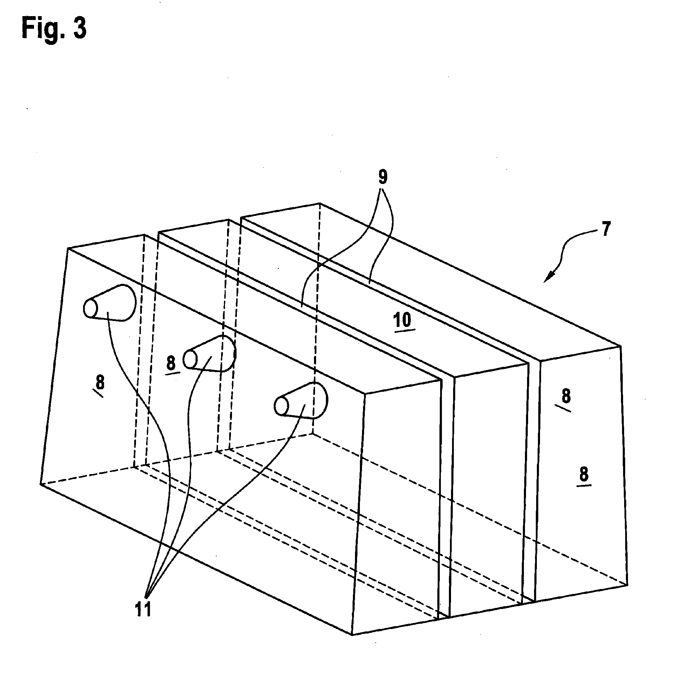

Die **Fig. 3** zeigt eine dreidimensionale Ansicht eines Profilelementes 7 eines Fahrzeugreifens, welcher mit einer erfindungsgemäßen Vulkanisierform heizgepresst worden ist. Das Profilelement 7 der Fig. 3 unterscheidet sich vom Profilelement 7 der Fig. 2 darin, dass die Abdrücke 11 der Entlüftungsmittel nicht auf der Laufstreifenkontaktfläche 10, sondern im Bereich der Profilblockflanke 8 angeordnet sind. Hierdurch ist vorteilhaft eine maximalgroße Laufstreifenkontaktfläche 10 erhalten. Die Abdrücke 11 sind Austriebe von zylindrischen Entlüftungskanälen und keine tellerförmigen Abdrücke eines Eurovents, wie in Fig. 2.

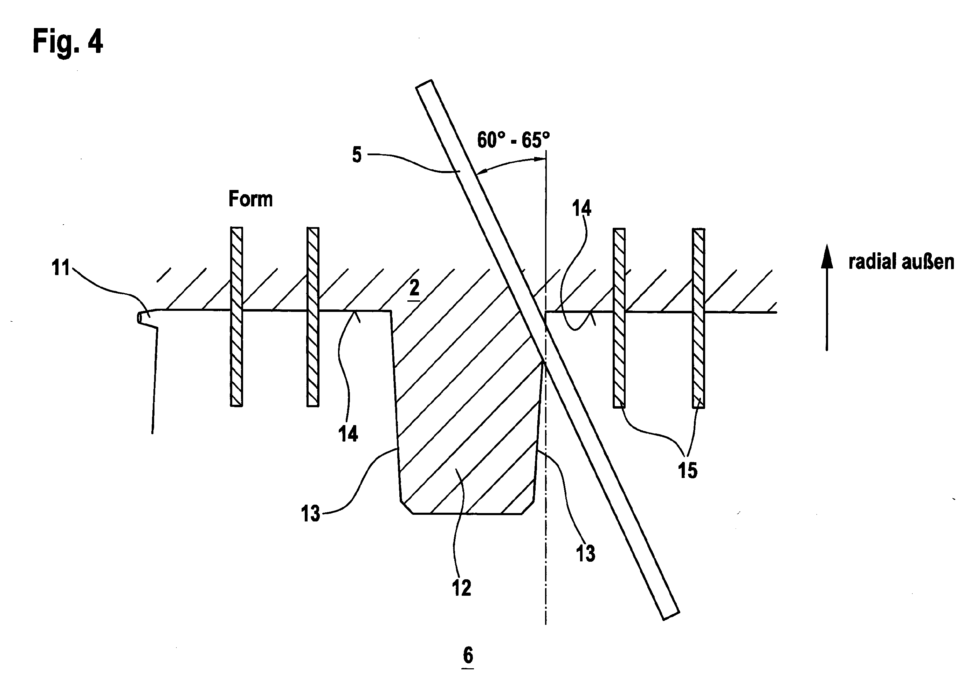

Die **Fig. 4** zeigt einen Ausschnitt eines Radialschnittes durch ein Formsegment 2 einer erfindungsgemäßen Vulkanisierform im Bereich seiner Formfläche 3. Die Formfläche 3 weist einen erhabenen Steg 12 mit Stegflanken 13 auf. Die Stegflanken 13 münden nach radial außen in dem Steggrund 14. Der Steg 12 prägt eine Nut des Fahrzeugreifen-Laufstreifens und begrenzt das erhabene Profilelement (nicht dargestellt) des Fahrzeugreifen-Laufstreifens. In den Steggrund 14 sind Lamellenbleche 15 eingelassen, welche die Feineinschnitte 9 des heizzupressenden Fahrzeugreifens formen. Das Entlüftungsmittel 5 (hier durch einen Bohrer dargestellt, der den Kanal des Entlüftungsmittels bohrt) ist derart innerhalb eines Steges 12 angeordnet, dass dieses im Bereich einer Stegflanke 13 dieses Steges 12 in den Formenhohlraum 6 mündet. Das Entlüftungsmittel 5 mündet im unteren Drittel der Stegflanke 13 in den Formenhohlraum 6. Dabei mündet das Entlüftungsmittel derart in den Steg, dass dessen Längsachse einen Winkel zwischen 60° und 65° mit der radialen Richtung der Vulkanisierform einschließt. Hierdurch ist erreicht, dass der Abdruck des Entlüftungsmittels im Bereich der Stegflanke angeordnet ist und dass die Laufstreifenkontaktfläche des heizzupressenden Reifens frei von Abdrücken von Entlüftungsmitteln ist.

### Bezugszeichenliste

### (Teil der Beschreibung)

- 1: Vulkanisierform
- 2: Formsegment
- 3: Formfläche
- 4: Reifen
- 5: Entlüftungsmittel
- 6: Formenhohlraum
- 7: Profilelement
- 8: Profilblockkante
- 9: Feineinschnitt
- 10: Laufstreifenkontaktfläche
- 11: Abdruck
- 12: Steg
- 13: Stegflanke
- 14: Steggrund
- 15: Lamellenblech

## Patentansprüche

1. Vulkanisierform (1) für Fahrzeugreifen, welche aus Formsegmenten (2) mit innenseitigen Formflächen (3) zur Formgebung des heizzupressenden Fahrzeugreifens besteht, wobei die Formsegmente (2) zylindrische Entlüftungsmittel (5) aufweisen, welche mit der Atmosphäre in Verbindung stehen und durch welche Luft aus dem Formenhohlraum (6) der Vulkanisierform (1) durch das Formsegment (2) hindurch nach außen ausleitbar ist, wobei die das Laufflächenprofil des Fahrzeugreifens formenden Formflächen (3) der Formsegmente (2) erhabene Stege (12) mit Stegflanken (13) aufweisen, wobei die Stege (12) die Nuten des Fahrzeugreifen-Laufstreifens prägen sowie die erhabenen Profilelemente (7) des Fahrzeugreifen-Laufstreifens begrenzen und wobei zumindest ein Entlüftungsmittel (5) derart innerhalb eines Steges (12) angeordnet ist, dass dieses im Bereich einer Stegflanke (13) dieses Steges (12) in den Formenhohlraum (6) mündet
**dadurch gekennzeichnet, dass**
das Entlüftungsmittel (5) derart in den Steg (12) mündet, dass dessen Längsachse einen Winkel zwischen 40° und 70°, vorzugsweise zwischen 45° und 60° mit der radialen Richtung der Vulkanisierform (1) einschließt.

2. Vulkanisierform (1) nach Anspruch 1, **dadurch gekennzeichnet, dass** das Entlüftungsmittel (5) im unteren Drittel der Stegflanke (13) in den Formenhohlraum (6) mündet.

3. Vulkanisierform (1) nach Anspruch 3, **dadurch gekennzeichnet, dass** zwei Entlüftungsmittel (5), welche innerhalb desselben Steges (12) angeordnet sind und an gegenüberliegenden Flanken (13) dieses Steges (12) in den Formenhohlraum (6) münden, einander kreuzen.

## Claims

1. Vulcanization mould (1) for vehicle tyres, which consists of mould segments (2) with inner mould surfaces (3) for forming the vehicle tyre to be hot-pressed, the mould segments (2) having cylindrical venting means (5), which are in connection with the atmosphere and through which air can be conducted out of the mould cavity (6) of the vulcanization mould (1) through the mould segment (2) to the outside, the mould surfaces (3) of the mould segments (2) that form the tread profile of the vehicle tyre having raised bars (12) with bar flanks (13), the bars (12) defining the grooves of the vehicle tyre tread and delimiting the raised profile elements (7) of the vehicle tyre tread, and at least one venting means (5) being arranged within a bar (12) in such a way that it opens out into the mould cavity (6) in the region of a bar flank (13) of this bar (12),
**characterized in that**
the venting means (5) opens out into the bar (12) in such a way that its longitudinal axis forms an angle with the radial direction of the vulcanization mould (1) of between 40° and 70°, preferably between 45° and 60°.

2. Vulcanization mould (1) according to Claim 1, **characterized in that** the venting means (5) opens out into the mould cavity (6) in the lower third of the bar flank (13).

3. Vulcanization mould (1) according to Claim 2, **characterized in that** two venting means (5) that are arranged within the same bar (12) and open out into the mould cavity (6) on opposite flanks (13) of this bar (12) cross one another.

## Revendications

1. Moule de vulcanisation (1) pour des pneus de véhicule qui se compose de segments de moule (2) avec des faces de moule (3) du côté intérieur pour le façonnage du pneu de véhicule devant être pressé à chaud, les segments de moule (2) présentant des moyens de désaérage cylindriques (5), qui sont en liaison avec l'atmosphère et par lesquels de l'air peut être évacué hors de la cavité de moule (6) du moule de vulcanisation (1) vers l'extérieur à travers le segment de moule (2), les faces de moule (3) des segments de moule (2) formant le profil de surface de roulement du pneu de véhicule présentant des nervures rehaussées (12) avec des flancs de nervures (13), les nervures (12) imprimant les rainures de la bande de roulement du pneu de véhicule et limitant les éléments profilés rehaussés (7) de la bande de roulement du pneu de véhicule et au moins un moyen de désaérage (5) étant disposé à l'intérieur d'une nervure (12) de telle sorte que celui-ci débouche dans la cavité de moule (6) dans la région d'un flanc de nervure (13) de cette nervure (12),
**caractérisé en ce que**
le moyen de désaérage (5) débouche dans la nervure (12) de telle sorte que son axe longitudinal forme un angle compris entre 40° et 70°, de préférence compris entre 45° et 60°, avec la direction radiale du moule de vulcanisation (1).

2. Moule de vulcanisation (1) selon la revendication 1, **caractérisé en ce que** le moyen de désaérage (5) débouche dans la cavité de moule (6) dans le tiers inférieur du flanc de nervure (13).

3. Moule de vulcanisation (1) selon la revendication 2, **caractérisé en ce que** deux moyens de désaérage (5) qui sont disposés à l'intérieur de la même nervure (12) et qui débouchent au niveau de flancs opposés (13) de cette nervure (12) dans la cavité de moule (6) se croisent.
